# EUROPÄISCHE PATENTANMELDUNG

(11) **EP 1 241 644 A2**
(43) Veröffentlichungstag der Anmeldung: **18.09.2002**
(21) Anmeldenummer: 02005610.7
(22) Anmeldetag: 12.03.2002
(51) Int. Cl.: G07F 19/00, G06F 17/60

(54) **Verfahren zum Transaktionsnachweis**

(30) Priorität: 12.03.2001 DE 10112166
(71) Anmelder: Wendenburg, Jan, 44797 Bochum (DE)
(72) Erfinder: Wendenburg, Jan, 44797 Bochum (DE); Dahm, Percy, 44755 Castrop Rauxel (DE)
(74) Vertreter: Stute, Ivo, Dipl.-Ing.

(57) **Zusammenfassung**

Zum Nachweis von Zeitpunkt und Inhalt von Transaktionen in einem digitalen Netzwerk wird ein Verfahren vorgeschlagen, bei dem
a) durch einen mit dem Netzwerk verbundenen Auftraggeberrechner (1) beim Angebotsserver (3) ein digitales Formular angefordert wird,
b) das Formular vom Angebotsserver (3) an den Auftraggeberrechner (1) übersandt wird,
c) die in das Formular eingegebenen Formulardaten, die die für die Annahme des Angebots notwendigen Daten umfassen, an einen Auftragsannahmeserver zurückgesandt werden,
d) das vom Angebotsserver (3) an den Auftraggeberrechner (1) versandte Formular die Netzwerkadresse eines Transaktionsnachweisservers (4) enthält,
e) die Formulardaten vom Auftraggeberrechner (1) an den Transaktionsnachweisserver (4) gesandt werden,
f) die Formulardaten mit einer digitalen Zeitangabe versehen werden,
g) zu den Formulardaten und der digitalen Zeitangabe mindestens ein Prüfzifferncode erzeugt und dieser Prüfzifferncode mit einem Schlüssel zu einer Zeitsignatur kodiert wird, und
h) die Formulardaten vom Transaktionsnachweisserver (4) zusammen mit der digitalen Zeitangabe und der Zeitsignatur an den Auftragsannahmeserver übermittelt werden.

## Beschreibung

Die Erfindung betrifft ein Verfahren zum Nachweis von Transaktionen in einem digitalen Netzwerk, insbesondere im Internet, bei dem die Annahme eines über einen Angebotsserver präsentierten Angebots dadurch erfolgt, dass
a) durch einen mit dem Netzwerk verbundenen Auftraggeberrechner beim Angebotsserver ein digitales Formular angefordert wird,
b) das Formular vom Angebotsserver an den Auftraggeberrechner übersandt wird und
c) die in das Formular eingegebenen Formulardaten, die die für die Annahme des Angebots notwendigen Daten umfassen, an einen Auftragsannahmeserver zurückgesandt werden.

Werden Aufträge über das Internet vergeben, kann es zu einem Dissens zwischen Auftraggeber und Anbieter kommen, zu welchem Zeitpunkt welcher Auftrag erteilt worden ist. Daher werden Systeme entwickelt, mit denen der Auftraggeber bei der Auftragsvergabe identifizierbar ist und auch ein Nachweis über den Inhalt des Auftrages erbracht werden kann.

So sind beispielsweise für die Abwicklung von Überweisungsaufträgen im Internet Online-Banking-Systeme bekannt, bei denen sich der Auftraggeber über seinen Internetbrowser auf einem Bankenserver unter Angabe des Namens und eines Passworts einloggt, dann durch Anwählen eines Menüpunkts auf den Internetseiten des Bankenservers ein Überweisungsformular anfordert, welches ihm dann vom Bankenserver übermittelt wird, und welches er dann nach Ausfüllen des Formulars unter Angabe eines Transaktionsschlüssels, einer sogenannten TAN-Nummer, als Überweisungsauftrag autorisieren und an den Bankenserver übermitteln kann. Die Netzwerkadresse, an die der Überweisungsauftrag zurückgesandt wird, ist im Formular als sogenannter Hyperlink enthalten, der dann aktiviert wird, wenn der Auftraggeber beispielsweise den graphischen OK-Schalter (OK-Button) zum Abschließen des Überweisungsauftrags anwählt. Vom Bankenserver erhält der Auftraggeber dann eine Bestätigung, daß der Auftrag weiterbearbeitet wird.

Ähnliche Systeme gibt es beispielsweise zur Bestellung von Produkten über das Internet, allerdings muß dann der Auftrag in der Regel nicht über eine Transaktionsnummer autorisiert werden.

Ein Nachteil solcher Systeme besteht darin, dass sie programmiertechnisch aufwendig sind und an die Serverstruktur des jeweiligen Internetanbieters angepasst werden müssen. Eine solche Anpassung ist kostenintensiv. Auch besteht der Nachteil, dass es sowohl für den Anbieter als auch für den Auftraggeber schwierig ist, einen gesicherten Nachweis über Zeitpunkt und Inhalt des Auftrags zu führen, da die beim Anbieter und ggf. auch beim Auftraggeber vorliegenden Daten im nachhinein manipuliert werden können und die über das Internet versandten Daten nur einen geringen Beweiswert haben.

Vor diesem Hintergrund besteht die Aufgabe der vorliegenden Erfindung darin, ein Verfahren zur Verfügung zu stellen, dass einen Nachweis über Zeitpunkt und Inhalt von über das digitale Netzwerk erteilten Aufträgen zulässt und das einen vergleichsweise geringen programmiertechnischen Aufwand erfordert.

Diese Aufgabe wird für ein Verfahren der eingangs genannten Art dadurch gelöst, dass
d) das vom Angebotsserver an den Auftraggeberrechner versandte Formular die Netzwerkadresse eines Transaktionsnachweisservers enthält,
e) die Formulardaten vom Auftraggeberrechner an den Transaktionsnachweisserver gesandt werden,
f) die Formulardaten mit einer digitalen Zeitangabe versehen werden,
g) zu den Formulardaten und der digitalen Zeitangabe mindestens ein Prüfzifferncode erzeugt und dieser Prüfzifferncode mit einem Schlüssel zu einer Zeitsignatur kodiert wird, und
h) die Formulardaten vom Transaktionsnachweisserver zusammen mit der digitalen Zeitangabe und der Zeitsignatur an den Auftragsannahmeserver übermittelt werden.

Unter Prüfzifferncodes werden hier und im Weiteren Datenfolgen verstanden, die unter Anwendung eines bestimmten Algorithmus aus einem Datensatz oder einer Datei erzeugt werden und den Datensatz bzw. die Datei eindeutig identifizieren. Solche Datenfolgen sind auch unter der Bezeichnung Hash-Code bekannt. Sie sind in der Regel gegenüber den Datensätzen bzw. Dateien vergleichsweise klein und haben eine einheitliche Länge, beispielsweise eine Länge von n Bits. Ein Datenverarbeitungsprogramm kann aufgrund der geringeren und einheitlichen Größe mit einer solchen Datenfolge einfacher und schneller arbeiten als mit der gesamten Datei bzw. dem gesamten Datensatz, wenn es um die Identifizierung von Datensätzen geht.

Der Grundgedanke der Erfindung besteht darin, dass eine verschlüsselte Zeitsignatur erzeugt und zusammen mit den Auftragsdaten abgespeichert wird, wobei die Zeitsignatur für die Auftragsdaten und die digitale Zeitangabe zum Zeitpunkt des Erzeugens der Zeitsignatur eindeutig ist. Da die Zeitsignatur verschlüsselt ist, kann sie nicht geändert werden, ohne dass sie dabei gleichzeitig unbrauchbar gemacht wird. Als geeignete Verschlüsselungsverfahren kommen insbesondere das unter dem Begriff PGP (pretty good privacy) bekannte oder hierzu vergleichbare Verfahren in Betracht, bei denen ein digitales Datenpaket mit einem sogenannten privaten Schlüssel verschlüsselt und mit einem korrespondierenden öffentlichen Schlüssel wieder entschlüsselt werden kann.

Die Zeitangabe enthält insbesondere Datum und wahlweise auch die Uhrzeit, entweder als Ortszeit oder auch im Weltzeitformat (UTC) des Zeitpunkts der Übermittlung des Auftrags und/oder des Zeitpunkts des Erzeugens der Zeitsignatur umfassen.

Soll zu einem späteren Zeitpunkt der Nachweis erbracht werden, dass die zu einem späteren Zeitpunkt nach der Auftragserteilung vorhandenen Auftragsdaten der ihm beigefügten Zeitsignatur entsprechen, kann die Signatur entschlüsselt werden, so dass man den ursprünglich erzeugten Prüfzifferncode erhält. Der ursprünglichen Prüfzifferncode kann dann mit einem neuen Prüfzifferncode verglichen werden, der aus dem vorhandenen digitalen Sprachpaket und den vorhandenen Auftragsdaten und der digitalen Zeitangabe unter Verwendung des gleichen Algorithmus erzeugt wird. Stimmen der ursprüngliche und der neue Prüfzifferncode überein, ist der gewünschte Nachweis erbracht.

Dieser Nachweis wird immer dann misslingen, wenn mindestens eines der Datenpakete, die der Signatur zugrunde liegen, sich verändert hat, seien es die Auftragsdaten oder die Zeitangabe, da aus den geänderten Datenpaketen nicht mehr der in der Zeitsignatur enthaltene Prüfzifferncode erzeugt werden kann. Dieser Nachweis gelingt auch dann nicht, wenn die Signatur manipuliert worden ist, da sie dann nicht mehr entschlüsselt werden kann. Dies gilt zumindest für alle Verschlüsselungsverfahren, bei denen ein privater Schlüssel zur Verschlüsselung eingesetzt wird, solange dieser private Schlüssel weder dem Auftraggeber noch dem Anbieter bekannt sind.

Letzteres ist insbesondere dann der Fall, wenn der Betreiber des Transaktionsnachweisserver von dem Anbieter unabhängig ist.

Ein weiterer Vorteil des Verfahrens besteht darin, dass das Erzeugen der Zeitsignatur vor der Auftragsannahme und unabhängig davon erfolgt. Auf diese Weise wird es für den Anbieter unmöglich, die Auftragsdaten nach der Entgegennahme des Auftrags vor der Bestätigung des Auftrags zu manipulieren. Somit können sowohl der Auftraggeber als auch der Anbieter bei einem erfolgreichen Nachweis über Zeitpunkt und Inhalt des Auftrags sicher davon ausgehen, dass die Auftragsdaten den vom Auftraggeber übermittelten Daten entsprechen.

Somit ermöglicht das erfindungsgemäße Verfahren einen Nachweis darüber, dass zu einer bestimmten Zeit ein Auftrag mit einem bestimmten Inhalt erteilt worden ist.

Gleichzeitig erfordert das Nachweisverfahren keine tiefgreifenden Eingriffe in die Serverstruktur des Anbieters. Wird der Transaktionsnachweisserver ausschließlich in Verbindung mit einem Auftragsannahmeserver verwendet, wenn also der Transaktionsnachweisserver alle an ihn übermittelten Auftragsdaten ausschließlich an einen Auftragsannahmeserver eines Anbieters übermittelt, reicht es aus, wenn im digitalen Formular, dass der Anbieter zur Auftragsvergabe anbietet, die Netzwerkadresse des Transaktionsnachweisservers enthalten ist. Wird der Transaktionsnachweisserver zum Nachweis von Aufträgen in Verbindung mit einer Vielzahl von Auftragsannahmeservern eines oder mehrerer Anbieter verwendet, müssen im vom Angebotsserver versandten digitalen Formular zusätzlich die Netzwerkadresse des für den Auftrag zuständigen Auftragsannahmeservers oder andere diesen Auftragsannahmeserver identifizierende Angaben enthalten sein.

In diesem Zusammenhang wird unter dem Auftragsannahmeserver ein mit dem Netzwerk verbundener Rechner verstanden, der beim Netzwerkanbieter die Aufgabe der Annahme des Auftrags übernimmt. Diese Aufgabe kann gegebenenfalls auch auf dem Angebotsserver abgewickelt werden, so dass der Angebotsserver auch gleichzeitig der Auftragsannahmeserver ist.

Im Ergebnis müssen lediglich die Daten des digitalen Formulars modifiziert werden, ohne daß weitere Abwicklungsprozeduren für die Auftragsvergabe auf dem Angebotsserver oder dem Auftragsannahmeserver notwendig sind. Damit ist das Nachweisverfahren für eine Vielzahl von Angebots- und Auftragsannahmeservern einsetzbar.

In einer bevorzugten Ausgestaltung des Verfahrens enthält das vom Angebotsserver an den Auftraggeberrechner versandte Formular die Netzwerkadresse des Auftragsannahmeservers. Wie bereits oben erwähnt wird es hierdurch möglich, dass der Transaktionsnachweisserver Aufträge für eine Vielzahl von Auftragsannahmeservern eines oder mehrerer Anbieter mit einer Zeitsignatur auf die erfindungsgemäße Weise verarbeiten kann, wobei er das jeweilige Formular zusammen mit der Zeitangabe und der Zeitstempelsignatur an den darin genannten Auftragsannahmeserver übermittelt.

Dabei ist es zum eindeutigen Nachweis der Person des Auftraggebers von besonderem Vorteil, wenn die Formulardaten mit einer digitalen Signatur versehen werden, bevor es an den Transaktionsnachweisserver gesandt wird. Eine solche Signatur kann auftraggeberseitig beispielsweise über ein sogenanntes Smartcard-System erfolgen, oder es besteht als weiteres Beispiel auf Auftraggeberseite ein mit dem Auftraggeberrechner verbundener Signierungsserver, an den die mit der Signatur zu versehenden Formulardaten vom Auftraggeberrechner zur Signierung übermittelt werden, und der die mit der Signatur versehenen Formulardaten an den Auftraggeberrechner zurücksendet.

In diesem Zusammenhang kann es ebenso von Vorteil sein, wenn die Formulardaten erst dann zum Versenden an den Transaktionsserver freigegeben wird, wenn sie die den Auftraggeber identifizierende digitale Signatur enthalten. Da die Formulare in der Regel selbst kleine Computerprogramme (beispielsweise sogenannte ActiveX-Komponenten oder Javaskripte) bzw. standardisierte Arbeitsanweisungen für andere Computerprogramme enthalten, ist es beispielsweise möglich, dass die im Formular enthaltene Netzwerkadresse des Transaktionsnachweisservers erst dann zur Übermittlung der Formulardaten zur Verfügung gestellt wird, wenn das Formular vollständig ausgefüllt ist und die Formulardaten mit einer digitalen Signatur versehen sind.

Um zu vermeiden, dass trotzdem ein Auftrag ohne eine den Auftraggeber identifizierende Signatur oder mit einer fehlerhaften Signatur an den Auftragsannahmeserver übermittelt werden, ist es darüber hinaus empfehlenswert, dass der Transaktionsnachweisserver überprüft, ob die Formulardaten mit einer digitalen Signatur des Auftraggebers versehen sind, und die Formulardaten im Falle des Fehlens oder eines Fehlers in der digitalen Signatur an den Auftraggeberrechner zurücksendet.

Des weiteren kann es von Vorteil sein, wenn der Transaktionsnachweisserver prüft, ob der Auftraggeber bzw. ein in der digitalen Signatur enthaltenes Zertifikat, das den Auftraggeber identifiziert, in einer Auftraggeberdatenbank enthalten ist. So ist es denkbar, dass jeder Auftraggeber bei dem Transaktionsnachweisserver registriert sein muss, bevor er hierüber einen Auftrag abwickeln kann. Der Vorteil besteht insbesondere darin, dass durch die Registrierung jeder Auftraggeber vor einer Auftragsannahme als bekannt identifiziert werden kann. Somit wird es möglich, die Auftragsannahme bereits durch den Transaktionsnachweisserver zu verweigern, wenn bekannt ist, dass der Auftraggeber das Auftragssystem zuvor missbräuchlich verwendet hat, und es können geschlossene Auftraggebergruppen gebildet werden, beispielsweise zur Abwicklung von Bestellungen im Rahmen der Zusammenarbeit eines produzierenden Unternehmens und seinen Zulieferern, z.B. in der Automobilindustrie.

In einer anderen bevorzugten Ausgestaltung des Verfahrens versieht der Transaktionsnachweisserver die Formulardaten mit einer den Transaktionsnachweisserver identifizierenden Signatur. Hierdurch kann später ein Nachweis erfolgen, an welcher Stelle die Formulardaten verarbeitet worden und welchen Weg die Formulardaten bis zur Auftragsannahme durchlaufen sind.

Von ganz besonderem Vorteil ist es, wenn der Transaktionsnachweisserver die Formulardaten an einen Zertifizierungsserver weiterleitet, der für die Formulardaten als Zeitsignatur ein Zeitstempelzertifikat erzeugt und das Zeitstempelzertifikat an den Transaktionsnachweisserver zurücksendet. Solche Zertifizierungsserver sind bekannt. Sie werden eingesetzt, um digitale Daten mit einem fälschungssicheren Zeitstempel zu versehen, um eine fälschungssichere Authentifizierung von Daten gemäß dem in Kürze in Deutschland geltenden Signaturgesetz zu ermöglichen. Werden Daten von einem solchen Zertifizierungsserver signiert, wird ein hierüber geführter Nachweis der Vollständigkeit und des Zeitpunkts des Bestehens der Daten als Beweismittel in juristischen Auseinandersetzungen anerkannt. Der Aufbau und die Funktionsweise solcher Zertifizierungsserver wird beispielsweise in der Zeitschrift c'T in der Ausgabe 8/98 unter dem Titel "Echtzeits-Zertifikat" von Dr. Matthias Meinhold beschrieben.

Das Nachweisverfahren wird insbesondere dann für den Auftraggeber transparent, wenn die an den Angebotsserver übergebenen Daten für den Auftraggeber zugänglich im Netzwerk abgespeichert werden. So hat der Auftraggeber jederzeit die Möglichkeit, die Formulardaten zusammen mit der Zeitsignatur abzurufen, um den Nachweis des Zeitpunkts und des Inhalts des von ihm vergebenen Auftrags zu führen.

Zum gleichen Zweck können die an den Angebotsserver übergebenen Daten nach erfolgter Zeitsignierung auch an den Auftraggeberrechner übermittelt werden.

Das Abspeichern der Daten im Netzwerk bzw. das Übermitteln der Daten an den Auftraggeberrechner sollte bevorzugt vom Transaktionsnachweisserver erfolgen, kann aber auch durch den Auftragsannahmeserver durchgeführt werden.

Werden die Daten dem Auftraggeber nach der Zeitsignierung nach der Auftragsvergabe nicht zur Verfügung gestellt, kann der Nachweis über Zeitpunkt und Inhalt des Auftrags nur durch den Anbieter geführt werden.

Um insbesondere in diesem Fall die Auftragsvergabe für den Auftraggeber transparent zu gestalten, übermittelt der Auftragsannahmeserver in einer bevorzugten Ausgestaltung des Verfahrens eine Auftragsbestätigung an den Transaktionsnachweisserver, und der Transaktionsnachweisserver leitet die Auftragsbestätigung an den Auftraggeberrechner weiter.

Nachfolgend wird die Erfindung anhand einer Prinzipskizze, in der eine im Rahmen der Erfindung bevorzugte Anordnung von verschiedenen Rechnern und Servern dargestellt ist, näher erläutert.

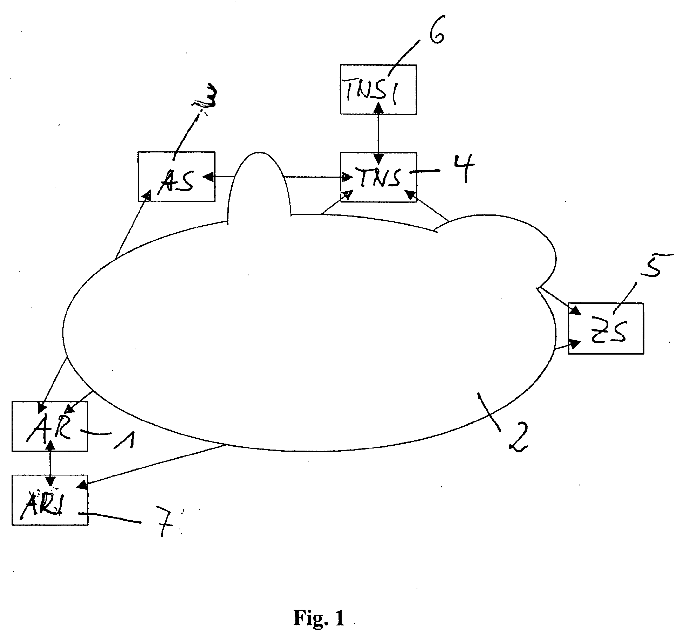

Figur 1 zeigt einen Auftraggeberrechner **1**, der über das Internet **2** mit einem Angebotsserver **3** eines Internetanbieters sowie einem Transaktionsnachweisserver **4** verbunden ist. Der Transaktionsnachweisserver **4** steht ebenso mit dem Angebotsserver **3** und darüber hinaus über das Internet **2** mit einem Zertifizierungsserver **5** in Verbindung.

Der Transaktionsnachweisserver **4** weist Mittel **6** zum Erzeugen einer ihn identifizierenden digitalen Signatur auf, ebenso wie der Auftraggeberrechner **1** Mittel **7** zum Erzeugen einer den Auftraggeber identifizierenden Signatur aufweist.

Möchte der Auftraggeber das Angebot des Internetanbieters annehmen, fordert er mit einer Browsersoftware über den Auftraggeberrechner **1** beim Angebotsserver **3** ein digitales Formular zur Auftragsvergabe mit einem sogenannten "Request" an. Als Antwort hierauf übermittelt der Angebotsserver **3** mit einer sogenannten "Response" das digitale Formular an den Auftraggeberrechner **1**. Auf Basis der Formulardaten werden dem Auftraggeber dann von der Browsersoftware Eingabefelder zum Ausfüllen des Formulars mit den Auftragsdaten angezeigt.

Nachdem der Auftraggeber das Formular mit seinen Auftragsdaten, den Formulardaten, ausgefüllt hat, fügt er diesen durch die Mittel **7** zum Erzeugen einer Signatur eine Signatur zur Identifizierung seiner Person oder des den Auftrag erteilenden Unternehmens hinzu.

Als Mittel **7** können insbesondere Smartcard-Systeme verwendet werden, wobei die Smartcard eine einen Computerchip tragende Plastikkarte sein kann, der einen für den Auftraggeber eindeutigen digitalen Schlüssel enthält. Das Erzeugen und Hinzufügen der Signatur des Auftraggebers kann dabei entweder direkt am Auftraggeberrechner erfolgen, oder aber innerhalb eines Unternehmens als Auftraggeber über Signaturserver, auf die der Auftraggeberrechner zugreifen kann. Insbesondere bei Unternehmensnetzwerken mit eigenem Signaturserver ist es gegebenenfalls sinnvoll, wenn die signierten Daten samt Signatur mit einem Echtzeits-Zertifikat, dass von einem Zertifizierungsserver angefordert wird, verknüpft werden. Hierüber lassen sich auch unternehmensintern die Vergabe von Aufträgen mit einem hohen Beweiswert protokollieren.

Statt der Verwendung von Smartcard-Systemen können auch andere Identifikationssysteme verwendet werden, beispielsweise solche, die die Signatur anhand eines Fingerabdrucks der den Auftrag vergebenden Person oder anhand sonstiger den Auftraggeber eindeutig identifizierenden eindeutigen Körpereigenschaften wie die Gesichtszüge, die Iris eines Auges o.ä. erzeugen. Solche Identifizierungs- und Signatursysteme sind im Markt erhältlich und hinreichend bekannt.

Nach erfolgter Signierung sendet der Auftraggeber die Formulardaten durch eine Bestätigung der Eingabe der Formulardaten ab, beispielsweise durch Betätigen eines OK-Schalters (OK-Button). Dabei kann das digitale Formular derart mit Softwareanweisungen versehen sein, dass die Bestätigung der Eingabe der Formulardaten erst dann möglich ist, wenn das Formular vollständig ausgefüllt und/oder die den Auftraggeber identifizierende Signatur hinzugefügt ist.

Das vom Anbieter an den Auftraggeber übermittelte digitale Formular enthält die Netzwerkadresse eines Transaktionsnachweisservers **4**. An diesen Transaktionsnachweisserver **4** werden die Formulardaten nach der Bestätigung ihrer Eingabe durch den Auftraggeberrechner **1** als Request übermittelt.

Nachdem der Transaktionsnachweisserver **4** die Formulardaten erhalten hat, überprüft der Transaktionsnachweisserver **4**, ob die Formulardaten eine gültige Signatur des Auftraggebers enthalten. Bei dieser Überprüfung kann durch Abfrage in einer Auftraggeberdatenbank auch festgestellt werden, ob der Auftraggeber im Transaktionsnachweissystem registriert ist.

Sind die Prüfkriterien nicht oder nicht vollständig erfüllt, sendet der Transaktionsnachweisserver **4** die Formulardaten ggf. unter Angabe des Fehlers an den Auftraggeberrechner **1** als Response zurück. Sind alle Prüfkriterien erfüllt, versieht der Transaktionsnachweisserver **4** die Formulardaten über die Mittel **6** zum Erzeugen einer ihn identifizierenden Signatur mit einer Signatur und fordert bei dem Zertifizierungsserver **5** ein Zeitstempelzertifikat als Request an.

Hierfür kann der Transaktionsnachweisserver **4** beispielsweise alle Formulardaten ggf. zusammen mit der den Transaktionsnachweisserver **4** identifizierenden Signatur vollständig an den Zertifizierungsserver **5** übermitteln. In diesem Fall erzeugt der Zertifizierungsserver **5** zu den ihm übermittelten Daten einen ersten Prüfzifferncode, verknüpft den ersten Prüfzifferncode mit einer vom Zertifizierungsserver erzeugten digitalen Zeitangabe, erstellt auf Basis des ersten Prüfzifferncodes und der digitalen Zeitangabe einen zweiten Prüfzifferncode und verschlüsselt diesen zweiten Prüfzifferncode mit einem privaten Schlüssel zu einer Zeitstempelsignatur. Die vom Transaktionsnachweisserver **4** übermittelten Daten werden dann zusammen mit dem ersten Prüfzifferncode, der digitalen Zeitangabe und der Zeitstempelsignatur an den Transaktionsnachweisserver **4** als Response zurückgesendet.

Es ist auch möglich, dass der Transaktionsnachweisserver **4** bereits selbst einen ersten Prüfzifferncode auf Basis der Formulardaten und ggf. der ihn identifizierenden Signatur erzeugt und lediglich den ersten Prüfzifferncode an den Zertifizierungsserver **5** übermittelt, und der Zertifizierungsserver **5** dann in entsprechender Weise die Zeitstempelsignatur erzeugt und die Zeitstempelsignatur zusammen mit dem ersten Prüfzifferncode und der digitalen Zeitangabe an den Transaktionsnachweisserver **4** als Response zurücksendet.

Der Transaktionsnachweisserver **4** übermittelt dann die Formulardaten zusammen mit dem ersten Prüfzifferncode, der digitalen Zeitangabe und der Zeitstempelsignatur als Request an einen Auftragsannahmeserver, im vorliegenden Beispiel dem Angebotsserver **3**, der die Funktion des Auftragsannahmeservers zur Verfügung stellt. Die Netzwerkadresse des Angebotsannahmeservers ist bereits im vom Angebotsserver **1** an den Auftraggeberrechner übermittelten digitalen Formular enthalten und wird als Bestandteil der Formulardaten mitgeführt, so dass dem Transaktionsnachweisserver die Netzwerkadresse des Auftragsannahmeservers zum Zeitpunkt der Verarbeitung der Formulardaten bekannt ist.

Gehen die Formulardaten beim Auftragsannahmeserver vollständig ein, versendet der Auftragsannahmeserver eine Auftragseingangsbestätigung an den Transaktionsnachweisserver **4** als Response zurück, der die Auftragseingangsbestätigung ebenso als Response an den Auftraggeberrechner **1** weiterleitet. Die Auftragseingangsbestätigung kann dabei, muss aber nicht zwingend, alle beim Auftragsannahmeserver eingegangenen Daten, insbesondere die Formulardaten zusammen mit der Zeitsignatur und dem ersten Prüfzifferncode, umfassen.

In einer etwas abgeänderten Ausführung des Verfahrens wird vom Transaktionsnachweisserver **4** nicht die vom Auftragsannahmeserver versandte Auftragseingangsbestätigung an den Auftraggeberrechner **1** als Response weitergeleitet, sondern lediglich eine Kopie der an den Auftragsannahmeserver übermittelten Formulardaten zusammen mit dem ersten Prüfzifferncode, der digitalen Zeitangabe und der Zeitstempelsignatur, oder auch nur eine kurze Empfangsbestätigung der vom Auftraggeberrechner 1 an den Transaktionsnachweisserver **4** übermittelten Formulardaten. Zwar hat der Auftraggeber dadurch keine Gewähr dafür, dass der Auftrag beim Anbieter eingegangen ist, er hat allerdings in jedem Fall die Gewissheit, dass zum Zeitpunkt der Auftragsabwicklung eine Nachweismöglichkeit über den Zeitpunkt und Inhalt des Auftrags besteht. Diese vereinfachte Verfahrensweise bietet sich insbesondere bei der Auftragsabwicklung mit Endkunden an, die in der Regel nicht den Willen und auch nicht die Möglichkeit haben, alle Aufträge zu archivieren. In diesem Fall besteht insbesondere für das anbietende Unternehmen die Nachweismöglichkeit, dass der Auftrag so ausgeführt worden ist, wie er auch vom Auftraggeber erteilt worden ist.

In jedem Fall erhält der Anbieter und ggf. auch der Auftraggeber Zugriff auf alle Daten, die für den Nachweis des Zeitpunkts und Inhalts des vom Auftraggeber gegebenen Auftrags erforderlich sind. Zum Nachweis muss dann lediglich die Zeitstempelsignatur mit dem öffentlichen Schlüssel des Zertifizierungsservers **5** entschlüsselt werden, aus den vorhandenen Auftragsdaten, ggf. der Signatur des Transaktionsnachweisservers **4** und der digitalen Zeitangabe ein neuer erster und zweiter Prüfzifferncode ermittelt werden und diese neuen Prüfzifferncodes mit den zum Zeitpunkt der Vergabe des Auftrags erstellten Prüfzifferncodes verglichen werden. Stimmen die Prüfzifferncodes überein, stimmen auch die vorliegenden Auftragsdaten mit den Auftragsdaten, die zum Zeitpunkt der Auftragsvergabe bestanden haben, überein.

## Patentansprüche

1. Verfahren zum Nachweis von Transaktionen in einem digitalen Netzwerk, insbesondere im Internet, bei dem die Annahme eines über einen Angebotsserver präsentierten Angebots dadurch erfolgt, dass
a) durch einen mit dem Netzwerk verbundenen Auftraggeberrechner (1) beim Angebotsserver (3) ein digitales Formular angefordert wird,
b) das Formular vom Angebotsserver (3) an den Auftraggeberrechner (1) übersandt wird und
c) die in das Formular eingegebenen Formulardaten, die die für die Annahme des Angebots notwendigen Daten umfassen, an einen Auftragsannahmeserver zurückgesandt werden,
**dadurch gekennzeichnet, dass**
d) das vom Angebotsserver (3) an den Auftraggeberrechner (1) versandte Formular die Netzwerkadresse eines Transaktionsnachweisservers (4) enthält,
e) die Formulardaten vom Auftraggeberrechner (1) an den Transaktionsnachweisserver (4) gesandt werden,
f) die Formulardaten mit einer digitalen Zeitangabe versehen werden,
g) zu den Formulardaten und der digitalen Zeitangabe mindestens ein Prüfzifferncode erzeugt und dieser Prüfzifferncode mit einem Schlüssel zu einer Zeitsignatur kodiert wird, und
h) die Formulardaten vom Transaktionsnachweisserver (4) zusammen mit der digitalen Zeitangabe und der Zeitsignatur an den Auftragsannahmeserver übermittelt werden.

2. Verfahren nach Anspruch 1, **dadurch gekennzeichnet, dass** das vom Angebotsserver (3) an den Auftraggeberrechner (1) versandte Formular die Netzwerkadresse des Auftragsannahmeservers enthält.

3. Verfahren nach einem der vorstehenden Ansprüche, **dadurch gekennzeichnet, dass** den Formulardaten, bevor sie an den Transaktionsnachweisserver (4) gesandt werden, mit einer den Auftraggeber identifizierenden digitalen Signatur versehen werden.

4. Verfahren nach Anspruch 3, **dadurch gekennzeichnet, dass** das Formular erst dann zum Versenden an den Transaktionsnachweisserver (4) freigegeben wird, wenn die Formulardaten die den Auftraggeber identifizierende digitale Signatur enthalten.

5. Verfahren nach Anspruch 3 oder 4, **dadurch gekennzeichnet, dass** der Transaktionsnachweisserver (4) überprüft, ob die Formulardaten mit einer fehlerfreien digitalen Signatur des Auftraggebers versehen sind, und die Formulardaten im Falle des Fehlens oder eines Fehlers in der digitalen Signatur an den Auftraggeberrechner (1) zurücksendet.

6. Verfahren nach einem der Ansprüche 3 bis 5, **dadurch gekennzeichnet, dass** der Transaktionsnachweisserver (4) überprüft, ob der Auftraggeber bzw. ein in der digitalen Signatur enthaltenes Zertifikat, das den Auftraggeber identifiziert, in einer Auftraggeberdatenbank enthalten ist.

7. Verfahren nach einem der vorstehenden Ansprüche, **dadurch gekennzeichnet, dass** der Transaktionsnachweisserver (4) die Formulardaten mit einer den Transaktionsnachweisserver (4) identifizierenden Signatur versieht.

8. Verfahren nach einem der vorstehenden Ansprüche, **dadurch gekennzeichnet, dass** der Transaktionsnachweisserver (4) die Formulardaten an einen Zertifizierungsserver (5) weiterleitet, der für die Formulardaten als Zeitsignatur ein Zeitstempelzertifikat (5) erzeugt und das Zeitstempelzertifikat an den Transaktionsnachweisserver (4) zurücksendet.

9. Verfahren nach einem der vorstehenden Ansprüche, **dadurch gekennzeichnet, dass** die an den Auftragsannahmeserver übermittelten Daten für den Auftraggeber zugänglich im Netzwerk abgespeichert werden.

10. Verfahren nach einem der vorstehenden Ansprüche, **dadurch gekennzeichnet, daß** die an den Auftragsannahmeserver übergebenen Daten auch an den Auftraggeberrechner (1) übermittelt werden.

11. Verfahren nach einem der vorstehenden Ansprüche, **dadurch gekennzeichnet, dass** der Auftragsannahmeserver an den Transaktionsnachweisserver (3) eine Bestätigung über den Erhalt der Auftragsdaten übermittelt, und der Transaktionsnachweisserver die Bestätigung an den Auftraggeberrechner (1) weiterleitet.
